# EUROPEAN PATENT APPLICATION

(11) **EP 4 321 126 A1**
(43) Date of publication of application: **14.02.2024**
(21) Application number: 21942326.6
(22) Date of filing: 27.05.2021
(51) Int. Cl.: A61C 8/00

(54) **ANGLED LOCKING TAPER ABUTMENT**

(71) Applicant: Ho, Chihchung, Kaohsiung City 843 (TW)
(72) Inventor: Ho, Chihchung, Kaohsiung City 843 (TW)
(74) Representative: 2K Patentanwälte Blasberg Kewitz & Reichel
(86) International application number: PCT/CN2021/096436
(87) International publication number: WO 2022/246748

(57) **Abstract**

An angled locking taper abutment (3), comprising a first portion (31), a second portion (32), and a third portion (33). The first portion (31) is used to be placed inside an opening (41) of a dental implant (4). The second portion (32) is connected to the upper part of the first portion (31), and comprises a lower end region (321) which is connected to the first portion (31), a middle end region (322) which is connected to the lower end region (321) and an upper end region (323) which is connected to the middle end region (322). The lower end region (321) is arranged inside an alveolar bone (6) and the upper end region (323) is arranged inside gingiva (60). An expansion region (324) is provided at the outer periphery of the upper end region (323), and the middle end region (322) or the lower end region (321) of the second portion (32) has a bending portion, thereby effectively solving the problem of inadequate amount of keratinized gingiva on a certain side. The third portion (33) is connected to the upper end region (323) of the second portion (32) and used for connecting a prosthesis (5). The third portion (33) is provided with at least one cut surface (331).

## Description

### FIELD OF THE INVENTION

The invention relates to an abutment, in particular to a locking taper abutment with angle.

### BACKGROUND OF THE INVENTION

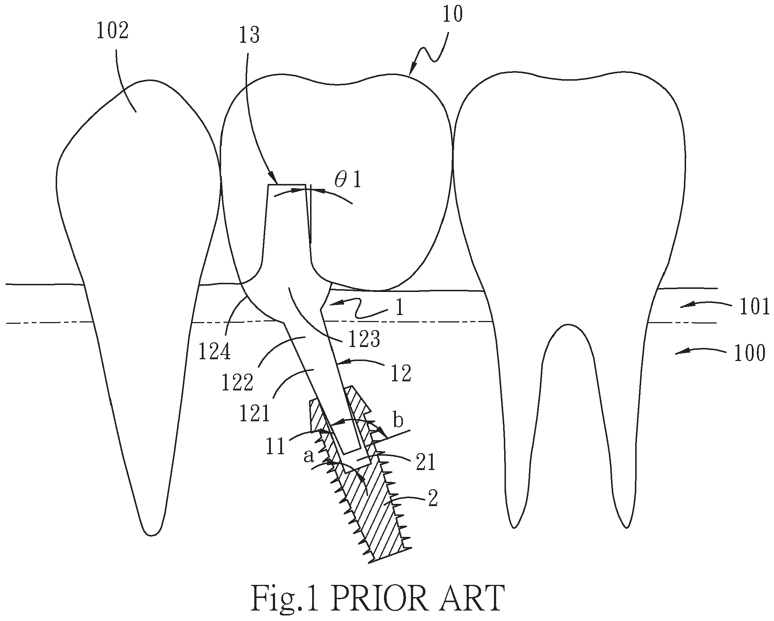

With reference to Fig. 1, the connection of locking taper is a connection method used in a dental implant 2. In the conventional technique, a locking taper abutment with angle 1 includes a first part 11, a second part 12 and a third part 13. The existing dental implant 2 includes an opening 21. The first part 11 is configured to be engaged in the opening 21 of the dental implant 2. The second part 12 includes a lower region 121, a middle region 122, and an upper region 123. The lower region 121 is connected with the first part 11, the middle region 122 is connected with the lower region 121, and the upper region 123 is connected with the middle region 122. The lower region 121 of the second part 12 is positioned in alveolar bone 100, the upper region 123 is positioned in gingiva 101, and an expansion region 124 is provided at an outer periphery of the upper region 123. The third part 13 is connected with the upper region 123 of the second part 12 for connection to a prosthesis 10 (for example: a fixed crown), and an angle θ 1 of the third part 13 is about 6-8 degrees.

Again with reference to Fig. 1, when the angle of implantation of the dental implant 2 is poor and an abutment with angle must be used, the angle of a bend at the third part 13 of the locking taper abutment is no more than 25 degree. Because the bend of the locking taper abutment with angle 1 is above the expansion region 124. The second part 12 is brought too close to the left tooth 102, so that the keratinized gingiva 101 near the bend is insufficient and inflammation is easily occurred.

Thus, when the locking taper abutment with angle 1 and the dental implant 2 are engaged, the first part 11 of the locking taper abutment with angle 1 has a conical angle of about 1-1.5 degrees, and the angle b of the first part 11 is slightly larger than the angle a of the opening 21 of the dental implant 2, thereby producing an effective locking engagement. The non-screw connection has good bacterial sealing property, so that the dental implant 2 can be implanted inside the alveolar bone 100 within 2mm-3mm without causing the bone above the connection to be damaged, so that a long-shank abutment is clinically used.

Therefore, there is a need to provide an innovative and progressive locking taper abutment with angle that solves the above-described problems, with further improvements.

### SUMMARY OF THE INVENTION

The invention mainly aims to solve the problem caused by the existing locking taper abutment with angle.

In order to achieve the above object, the invention provides a locking taper abutment with angle comprising a first part, a second part and a third part. The first part is configured to be engaged in an opening of a dental implant. The second part is connected above the first part, the second part comprises a lower region connected with the first part, a middle region connected with the lower region, and an upper region connected with the middle region, wherein the lower region of the second part is positioned in alveolar bone, the upper region is positioned in a gingiva, and an expansion region is arranged on an outer periphery of the upper region; the middle region or lower region of the second part comprises a bend. The third part is connected with the upper region of the second part for connection to a prosthesis, the third part being provided with at least one facet.

In one embodiment of the invention, the first part is in a conical shape and forms a tight fit with the opening of the dental implant, wherein the second part extends above the first part in a conical shape.

In one embodiment of the invention, the at least one facet is at an angle of approximately 0 degree to the opposite side.

In one embodiment of the invention, the bend is at intersection of a centerline of the third part with a centerline of the first part, and an angle at the bend is no more than 25 degree.

In one embodiment of the invention, the outer periphery of the upper region is not provided with the expansion region.

From the contents described above, compared with the conventional technique, the improvement comprises:
1. The bend of the locking taper abutment with angle of the present invention is positioned at the middle region or the lower region of the second part, thus effectively solving the problem when keratinized gingiva on a certain side is insufficient.
2. The third part of the present invention extends above the upper region of the second part, the facet is at an angle of approximately 0 degree from the opposite side, as opposed to the angle of approximately 6 degrees of the third part of the conventional locking taper abutment with angle, such that an angle of approximately 0 degree from the facet of the third part to the opposite side increases the retention force of the locking taper abutment with angle to the prosthesis (for example: a fixed crown).

### BRIEF DESCRIPTION OF THE DRAWINGS

Fig. 1 is a schematic view of a conventional locking taper abutment with angle engaged in a dental implant with a poor implant angle.
Fig. 2 is a schematic view of a locking taper abutment with angle and a dental implant according to a first embodiment of the present invention.
Fig. 3 is a perspective view of the locking taper abutment with angle of Fig. 2.
Fig. 4 is a schematic view of a locking taper abutment with angle and a dental implant according to a second embodiment of the present invention.
Fig. 5 is a perspective view of the locking taper abutment with angle in Fig. 4.

### DETAILED DESCRIPTION OF THE PREFERRED EMBODIMENTS

The following detailed description, taken in conjunction with the accompanying drawings, illustrates how the structures of the present invention may be combined and used, and it is to be understood that the objects, contents, features, and the effects of the invention.

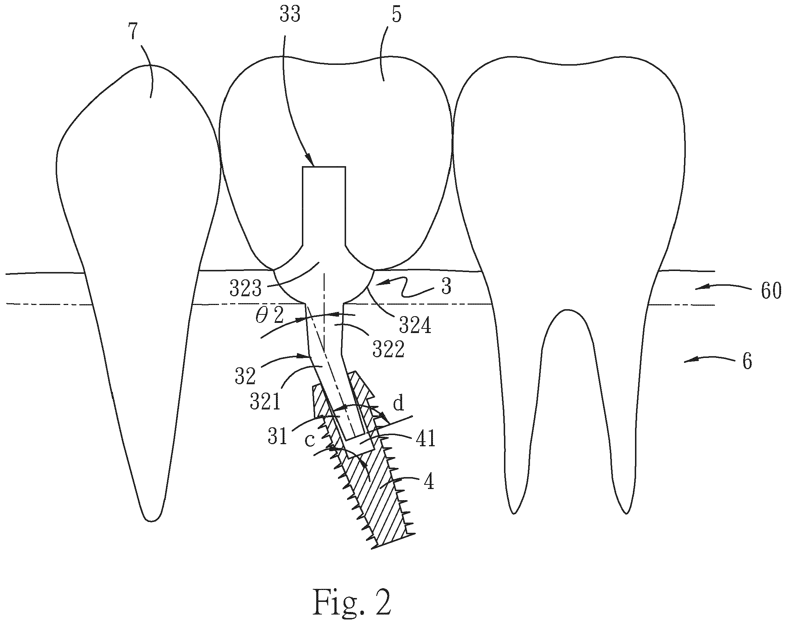

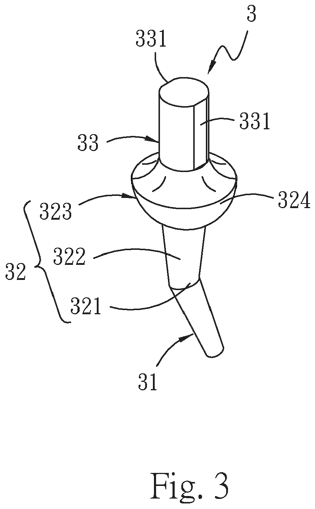

With reference to Figs. 2 and 3, the present invention provides a locking taper abutment with angle 3 of a first embodiment, and the locking taper abutment with angle 3 comprises: a first part 31, a second part 32 and a third part 33. The first part 31 is configured to be engaged in an opening 41 of a dental implant 4. In this embodiment, the first part 31 is disposed entirely within the opening 41 of the dental implant 4. The first part 31 is in a conical shape with about 1 to 1.5 degrees, forms a tight fit with the opening 41 of the dental implant 4, and the angle d of the first part 31 is slightly greater than the angle c of the opening 41 of the dental implant 4. The first part 31 is coupled only to the opening 41 of the dental implant 4 of a specific size.

Again with reference to Figs. 2 and 3, the second part 32 is connected above the first part 31. The second part 32 includes a lower region 321, a middle region 322, and an upper region 323. The lower region 321 is connected with the first part 31. The middle region 322 is connected with the lower region 321. The upper region 323 is connected with the middle region 322. The lower region 321, the middle region 322 and the upper region 323 extend in a conical shape from bottom to top to facilitate continuation of the third part 33. In addition, the lower region 321 of the second part 32 is positioned in alveolar bone 6, the upper region 323 is positioned in gingiva 60, and an expansion region 324 is provided at an outer periphery of the upper region 323.

Again with reference to Figs. 2 and 3, the third part 33 is connected with the upper region 323 of the second part 32 for connection to a prosthesis 5 (for example: a fixed crown). The third part 33 extends above the upper region 323 of the second part 32, the third part 33 being provided with at least a facet 331 which is at an angle of approximately 0 degree to the opposite side, which is different from the angle θ1 of approximately 6 degrees of the third part 13 of the existing locking taper abutment with angle 1. Therefore, the angle of the facet 331 of the third part 33 to the opposite side is close to 0 degree to increase the retention force of the locking taper abutment with angle 3 to the prosthesis 5.

Thus, with reference to Fig. 2, the locking taper abutment with angle 3 of the present invention is adapted for the dental implant 4 with a poor implantation angle. A bend in the locking taper abutment with angle 3 is positioned at either the middle region 322 or the lower region 321 of the second part 32, the bend being at intersection of a centerline of the third part 33 and a centerline of the first part 31. The angle θ2 at the bend is at most not more than 25 degrees. When assembled, the first part 31 is obliquely engaged in the opening 41 above the dental implant 4, so that the upper region 323 of the second part 32 and the third part 33 assumes an upright state, the third part 33 is connected with the prosthesis 5, and the position of the second part 32 at the gingiva 60 is effectively adjusted. The locking taper abutment with angle 3 is not so close to the left tooth 7.

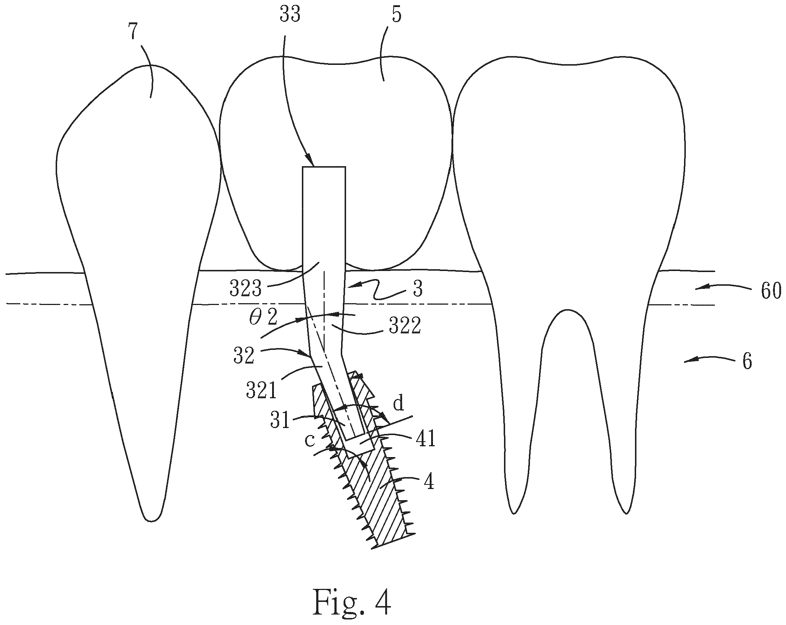

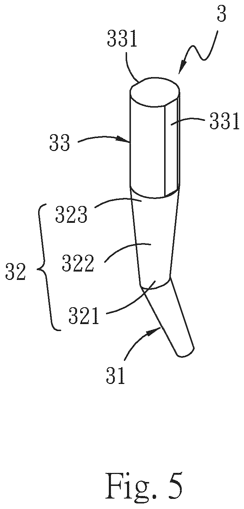

With reference to Figs. 4 and 5, the second embodiment of the locking taper abutment with angle 3 of the present invention is substantially the same as the locking taper abutment with angle 3 provided in Fig. 2, except that the outer periphery of the upper region 323 is not provided with the expansion region, leaving more space for the outer periphery of the upper region 323 of the second part 32 to keratinized gingiva 60.

### List of Reference Numerals

### Relating to prior art

- 1: locking taper abutment with angle
- 10: prothesis
- 100: alveolar bone
- 101: gingiva
- 102: left tooth
- 11: first part
- 12: second part
- 121: lower region
- 122: middle region
- 123: upper region
- 124: expansion region
- 13: third part
- 2: dental Implant
- 21: opening
- θ1: angle
- a,: b angle
relating to invention
- 3: locking taper abutment with angle
- 31: first part
- 32: second part
- 321: lower region
- 322: middle region
- 323: upper region
- 324: expansion region
- 33: third part
- 331: facet
- 4: dental Implant
- 41: opening
- 5: prosthesis
- 6: alveolar bone
- 60: gingiva
- 7: left tooth
- θ2: angle
- c,: d angle

## Claims

1. A locking taper abutment with angle (3), comprising:
a first part (31), configured to be engaged in an opening (41) of a dental implant (4);
a second part (32), connected above the first part (31), the second part (32) comprising a lower region (321) connected with the first part (31), a middle region (322) connected with the lower region (321), and an upper region (323) connected with the middle region (322), wherein the lower region (321) of the second part (32) is positioned in an alveolar bone (6), the upper end region (323) is positioned in a gingiva (60), an expansion region (324) is arranged on an outer periphery of the upper region (323), and the middle region (322) or the lower region (321) of the second part (32) is provided with a bend; and
a third part (33), connected with the upper region (323) of the second part (32) for connection to a prosthesis (5), the third part (33) being provided with at least one facet (331).

2. The locking taper abutment with angle (3) of claim 1, wherein the first part (31) is in a conical shape and forms a tight fit with the opening (41) of the dental implant (4), wherein the second part (32) extends above the first part (31) in a conical shape.

3. The locking taper abutment with angle (3) of claim 1, wherein the at least one facet (331) is at an angle of approximately 0 degree to an opposite side.

4. The locking taper abutment with angle (3) of claim 1, wherein the bend is at intersection of a centerline of the third part (33) with a centerline of the first part (31), and an angle (*θ*1) of the bend is no more than 25 degrees.

5. The locking taper abutment with angle (3) of claim 1, wherein the outer periphery of the upper region (323) is not provided with the expansion region (324).

6. The locking taper abutment with angle (3) of claim 5, wherein the first part (31) is in a conical shape and forms a tight fit with the opening (41) of the dental implant (4), wherein the second part (32) extends above the first part (31) in a conical shape.

7. The locking taper abutment with angle (3) of claim 5, wherein the at least one facet (331) is at an angle of approximately 0 degree to an opposite side.

8. The locking taper abutment with angle (3) of claim 5, wherein the bend is at intersection of a centerline of the third part (33) with a centerline of the first part (31), and an angle (*θ*2) of the bend is no more than 25 degrees.
